(19) Europäisches Patentamt
European Patent Office
Office européen des brevets

(11) EP 3 325 923 B1

(12) EUROPÄISCHE PATENTSCHRIFT

(45) Veröffentlichungstag und Bekanntmachung des Hinweises auf die Patenterteilung:
**03.06.2020 Patentblatt 2020/23**

(21) Anmeldenummer: **16730433.6**

(22) Anmeldetag: **22.06.2016**

(51) Int Cl.:
***G01F 1/32*** (2006.01) ***G01F 1/36*** (2006.01)
***G01F 1/40*** (2006.01)

(86) Internationale Anmeldenummer:
**PCT/EP2016/064372**

(87) Internationale Veröffentlichungsnummer:
**WO 2017/012811 (26.01.2017 Gazette 2017/04)**

# (54) DURCHFLUSSMESSGERÄT NACH DEM WIRBELZÄHLERPRINZIP

FLOW METER ACCORDING TO THE VORTEX COUNTING PRINCIPLE

DÉBITMÈTRE SELON LE PRINCIPE DE COMPTAGE DE TOURBILLONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2015 DE 102015111642**

(43) Veröffentlichungstag der Anmeldung:
**30.05.2018 Patentblatt 2018/22**

(73) Patentinhaber: **Endress+Hauser Flowtec AG**
**4153 Reinach (CH)**

(72) Erfinder:
- **KUMAR, Vivek**
**4123 Allschwil (CH)**
- **HOLLMACH, Marc**
**4056 Basel (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**WO-A1-00/08420**
**WO-A2-2004/001343**
**DE-A1- 10 240 189**
**DE-A1-102009 001 525**
**US-A1- 2009 211 368**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 325 923 B1

## Beschreibung

Die vorliegende Erfindung betrifft ein Durchflussmessgerät nach dem Wirbelzählerprinzip, welches beispielsweise im Durchfluss-Handbuch, 4. Auflage 2003, ISBN 3-9520220-3-9, S. 103 ff. beschrieben ist.

DE 10 2009 001525 offenbart einen Wirbelzählerprinzip, mit zwei Sensorfahnen am oberen und unteren Scheitelpunkt eines Rohrquerschnitts, um Kondensat detektieren zu können.

US 2009/211368 A1 offenbart einen Wirbelzähler, mit einem speziell geformten Stauköper um durchflussinduzierte Vibrationen zu vermindern.

Durchflussmessgeräte nach dem Wirbelzählerprinzip beruhen darauf, dass Wirbel sich alternierend von beiden Seiten eines umströmten Hindernisses in einer Rohrleitung ablösen und eine so genannte Karmansche Wirbelstraße bilden, wobei die Wirbel zu periodischen Druckschwankungen führen, die mit Drucksensoren oder einem Paddel zu erfassen sind. Die Ablösefrequenz der Wirbel ist für eine konkrete Messanordnung proportional zur Durchflussgeschwindigkeit und zur Strouhalzahl, einer dimensionslosen Kennzahl, welche eine schwache Abhängigkeit von der Reynoldszahl aufweist. Für weite Bereiche von Reynoldszahlen kann die Strouhalzahl in erster Näherung als konstant angenommen werden. Insbesondere für Reynoldszahlen unter 20000 gilt dies jedoch nicht mehr, so dass das Modell Ermittlung des Durchflusses anhand der Wirbelfrequenz noch verfeinert werden muss.

Ein Ansatz hierzu ist in EP 0 619 473 A1 beschrieben, wonach die Druckschwankungen mit zwei unterschiedlich weit vom Hindernis beabstandeten Paddeln erfasst werden. Die Phasendifferenz zwischen den erfassten Druckschwankungen wird dann zur Korrektur der Durchflussmessung herangezogen. Die Phasendifferenz weist allerdings starke Schwankungen auf, so dass die Signalverarbeitung zu deren Ermittlung sehr aufwändig ist. Dies gilt insbesondere dann, wenn ein kompaktes Durchflussmessgerät angestrebt wird, bei dem die Orte zum Erfassen der Druckschwankungen nahe beim Hindernis angeordnet und nicht weit voneinander entfernt sind.

Es ist daher die Aufgabe der vorliegenden Erfindung, ein Durchflussmessgerät nach dem Wirbelzählerprinzip und ein Messverfahren bereitzustellen, welche die Nachteile des Stands der Technik überwinden. Die Aufgabe wird erfindungsgemäß gelöst durch das Durchflussmessgerät gemäß dem unabhängigen Patentanspruch 1 und das Verfahren gemäß dem unabhängigen Patentanspruch 10.

Das erfindungsgemäße Durchflussmessgerät nach dem Wirbelzählerprinzip umfasst ein Messrohr; einen Staukörper, der in dem Messrohr angeordnet ist, wobei der Staukörper dazu dient, eine Karmansche Wirbelstraße mit durchflussabhängiger Wirbelfrequenz zu verursachen, wenn das Messrohr von einem Fluid durchströmt wird; eine erste Druckschwankungsmessanordnung zum Erfassen von Druckschwankungen, die durch die Wirbelstraße bewirkt sind, und zum Bereitstellen von druckschwankungsabhängigen Signalen; eine zweite Druckschwankungsmessanordnung zum Erfassen von Druckschwankungen, die durch die Wirbelstraße bewirkt sind, und zum Bereitstellen von druckschwankungsabhängigen Signalen; wobei die erste Druckschwankungsmessanordnung in Längsrichtung des Messrohrs von der zweiten Druckschwankungsmessanordnung beabstandet ist; eine Auswertungseinheit, welche dazu eingerichtet ist, anhand der Signale mindestens einer der Druckschwankungsmessanordnungen eine Wirbelfrequenz und in Abhängigkeit der Wirbelfrequenz einen Durchflussmesswert zu bestimmen; wobei erfindungsgemäß die Auswerteeinheit weiterhin dazu eingerichtet ist, anhand des Verhältnisses der Amplituden der Signale der ersten Druckschwankungsmessanordnung und der zweiten Druckschwankungsmessanordnung die aktuelle Reynoldszahl des im Messrohr strömenden Mediums zu bestimmen.

Gemäß einer Weiterbildung der Erfindung ist die Auswertungseinheit dazu eingerichtet ist, den Durchflussmesswert unter Berücksichtigung der ermittelten Reynoldszahl zu bestimmen.

Gemäß einer Weiterbildung der Erfindung umfasst mindestens eine der Druckschwankungsmessanordnungen einen Paddelsensor, also einen Sensor der ein Paddel aufweist, welches in das Messrohr hineinragt, wobei durch die Druckschwankungen im Medium auf den beiden Seiten des Paddels periodische Druckdifferenzen entstehen, so dass das Paddel ausgelenkt wird.

Gemäß einer Weiterbildung der Erfindung umfasst mindestens eine der Druckschwankungsmessanordnungen mindestens einen Druckabgriff in einer Messrohrwand und / oder dem Staukörper.

Gemäß einer Weiterbildung der Erfindung weist mindestens eine der Druckschwankungsmessanordnungen eine erste Differenzdruckmessanordnung auf, einem ersten Druckabgriff und einem zweiten Druckabgriff, zum Erfassen von Druckdifferenzen, die durch die Wirbelstraße bewirkt sind, und zum Bereitstellen von differenzdruckabhängigen Signalen.

Gemäß einer Weiterbildung der Erfindung weist die zweite der Druckschwankungsmessanordnungen eine zweite Differenzdruckmessanordnung auf, mit einem dritten Druckabgriff und einem vierten Druckabgriff, zum Erfassen von Druckdifferenzen, die durch die Wirbelstraße bewirkt sind, und zum Bereitstellen von differenzdruckabhängigen Signalen.

Gemäß einer Weiterbildung der Erfindung weist mindestens eine Druckschwankungsmessanordnungen einen Druckabgriff und einen Differenzdrucksensor mit einem ersten Druckeingang und einem zweiten Druckeingang auf, wobei der zweite Druckeingang eine Drossel aufweist, so dass er eine andere frequenzabhängige Übertragungsfunktion für Druckschwankungen aufweist, als der erste Druckeingang, wobei der erste Druckeingang und der zweite Druckeingang an den Druckabgriff angeschlossen sind, so dass das Signal des Differenzdrucksensors im Wesentlichen von der zeitlichen Änderung des Drucks (dp/dt) abhängt.

In einer Weiterbildung der Erfindung weist der Staukörper senkrecht zur Längsrichtung eine Breite b auf, wobei die erste Druckschwankungsmessanordnung in Längsrichtung des Messrohrs nicht weniger als eine Breite b insbesondere nicht weniger als zwei Breiten b, vorzugsweise nicht weniger als 3 Breiten b von der zweiten Druckschwankungsmessanordnung beabstandet ist.

In einer Weiterbildung der Erfindung ist die Auswerteeinheit weiterhin dazu eingerichtet, aus der aktuellen Reynoldszahl die kinematische Viskosität des im Messrohr strömenden Mediums zu bestimmen.

Das erfindungsgemäße Verfahren dient dem Bestimmen mindestens eines physikalischen Parameters eines Fluids, mittels eines Durchflussmessgeräts nach dem Wirbelzählerprinzip, wobei das Durchflussmessgerät umfasst: ein Messrohr zum Führen eines Fluids in Längsrichtung des Messrohrs; einen Staukörper, der in dem Messrohr angeordnet ist, wobei der Staukörper dazu dient, eine Karmansche Wirbelstraße mit durchflussabhängiger Wirbelfrequenz zu erzeugen, wenn das Messrohr von einem Fluid durchströmt wird; eine erste Druckschwankungsmessanordnung zum Erfassen von Druckschwankungen, die durch die Wirbelstraße bewirkt sind, und zum Bereitstellen von druckschwankungsabhängigen Signalen; eine zweite Druckmessanordnung zum Erfassen von Druckschwankungen, die durch die Wirbelstraße bewirkt sind, und zum Bereitstellen von druckschwankungsabhängigen Signalen; wobei die erste Druckschwankungsmessanordnung in Längsrichtung des Messrohrs von der zweiten Druckschwankungsmessanordnung beabstandet ist; wobei das Verfahren die folgenden Schritte aufweist: Strömenlassen eines Fluids durch das Messrohr; Erfassen von Druckschwankungen, welche durch die Wirbelstraße des strömenden Fluids verursacht sind mittels der ersten Druckschwankungsmessanordnung; Erfassen von Druckschwankungen, welche durch die Wirbelstraße des strömenden Fluids verursacht sind mittels der zweiten Druckschwankungsmessanordnung; und Bestimmen eines aktuellen Werts der Reynoldszahl des Fluids anhand des Verhältnisses der Amplituden Signale der ersten Druckschwankungsmessanordnung und der zweiten Druckschwankungsmessanordnung.

In einer Weiterbildung der Erfindung umfasst das Verfahren das Bestimmen eines Werts der Reynoldszahl des Fluids anhand des Verhältnisses der Amplituden Signale der ersten Druckschwankungsmessanordnung und der zweiten Druckschwankungsmessanordnung; das Bestimmen eines Werts der Frequenz mindestens eines der Signale der Druckschwankungsmessanordnung; und Bestimmen eines Durchflussmesswerts in Abhängigkeit von dem Wert der Frequenz unter Berücksichtigung des Werts der Reynoldszahl.

In einer Weiterbildung der Erfindung umfasst das Verfahren weiterhin das Bestimmen der kinematische Viskosität des im Messrohr strömenden Mediums, aus dem aktuellen Wert der Reynoldszahl.

Die Erfindung wird nun anhand der in den Zeichnungen dargestellten Ausführungsbeispiele näher erläutert. Es zeigen:

Fig. 1: Eine schematische Darstellung eines ersten Ausführungsbeispiels eines erfindungsgemäßen Durchflussmessgeräts in einem Längsschnitt, der quer zum Staukörper verläuft;

Fig. 2: Eine schematische Darstellung eines zweiten Ausführungsbeispiels eines erfindungsgemäßen Durchflussmessgeräts in einem Längsschnitt, der quer zum Staukörper verläuft;

Fig. 3a: Exemplarische Daten reynoldszahlabhängiger Amplitudenverhältnisse zwischen den Signalen von Druckschwankungsmessanordnungen für verschiedene Positionen der Messanordnungen;

Fig. 3b: Ein Messrohr mit Positionen von Druckschwankungsmessanordnungen für die zu den in Fig. 3a dargestellten Amplitudenverhältnissen führen; und

Fig. 3c: Die Strouhalzahl für Durchflussmessgeräte nach dem Wirbelzählerprinzip in Abhängigkeit von der Reynoldszahl.

Das in Fig. 1 dargestellte Ausführungsbeispiel eines erfindungsgemäßen Durchflussmessgeräte 1 nach dem Wirbelzählerprinzip umfasst ein Messrohr 2 mit einem Innendurchmesser d, in dem ein Staukörper 4 mit einer Breite b angeordnet ist, der insbesondere symmetrisch zu einer Symmetrieebene verläuft, in welcher die Längsachse des Messrohrs verläuft. Der Staukörper 4 ist an seinen beiden Enden mit dem Messrohr 2 verbunden. Der Staukörper 4 dient dazu, im Messbetrieb in einem im Messrohr strömenden Medium eine Karmansche Wirbelstraße mit durchflussabhängiger Wirbelfrequenz zu erzeugen.

Um diese Wirbelfrequenz zu erfassen, weisen gattungsgemäße Durchflussmessgeräte nach dem Wirbelzählerprinzip eine Druckschwankungsmessanordnung zum Erfassen von Druckschwankungen auf, die durch die Wirbelstraße bewirkt sind. Das erfindungsgemäße Durchflussmessgerät 1 weist zwei derartige Druckschwankungsmessanordnungen auf, die hier jeweils ein Paar Drucksensoren mit einer hinreichend schnellen Messwerterfassung aufweisen, um Wirbelfrequenzen bis zu etwa 3 kHz erfassen zu können. Eine erste Druckschwankungsmessanordnung umfasst einen ersten Drucksensor 12 und einen zweiten Drucksensor 14, die bezüglich einer Rohrmittenebene symmetrisch zueinander am Staukörper angeordnet sind. Eine zweite Druckschwankungsmessanordnung umfasst einen dritten Drucksensor 16 und einen vierten Drucksensor 18, die bezüglich der obigen Symmetrieebene symmetrisch zueinander an der Mantelfläche des Staukörpers angeordnet sind. Die Drucksensoren 16, 18 der zweiten Druckschwankungsmessanordnung sind in einem Abstand x in Strömungsrichtung von den Drucksensoren 12, 14 der ersten Druckschwankungsmessanordnung angeordnet, der ein Vielfaches der Breite b des Staukörpers beträgt, wobei insbesondere gilt $1< x/b < 10$. Drucksensoren mit einer hinreichend schnellen Messwerterfassung sind beispielsweise von der Firma Kulite erhältlich.

Die Drucksensoren können einerseits Absolutdruck- oder Relativdrucksensoren sein, welche jeweils den Mediendruck gegenüber Vakuum bzw. Atmosphärendruck messen, oder dynamische Drucksensoren, welche den Mediendruck den beiden Seiten einer Messmembran des dynamischen Drucksensors mit unterschiedlichen Zeitkonstanten zuführen, was bewirkt, dass unmittelbar Druckschwankungen erfasst werden. Insofern als in einer Rohrleitung auch andere Ursachen für Druckschwankungen auftreten können, welche den Druckschwankungen aufgrund der Karmanschen Wirbelstraße überlagert sind, ist vorgesehen, jeweils die Differenz der Signale der beiden Drucksensoren einer Druckschwankungsmessanordnung zur Bestimmung der Wirbelfrequenz heranzuziehen. Grundsätzlich können die Druckschwankungsmessanordnungen jeweils anstelle zweier Drucksensoren auch einen Differenzdrucksensor aufweisen, welcher die Differenz zwischen dem jeweiligen Druck an zwei symmetrisch zur obigen Symmetrieebene angeordneten Druckabgriffpunkten erfasst, wobei hierzu Wirkdruckleitungen oder Hydraulikleitungen mit einer möglichst geringen Zeitkonstanten zwischen den Druckabgriffpunkten und dem Differenzdrucksensor vorzusehen sind.

Das erfindungsgemäße Durchflussmessgerät umfasst weiterhin eine Betriebs- und Auswertungseinheit 20 zum Auswerten der Signale der Druckschwankungsmessanordnungen. Die Betriebs- und Auswertungseinheit 20 kann beispielsweise erste und zweite Substraktionsschaltungen 22, 24 aufweisen, welche jeweils ein Differenzsignal aus den Signalen der Drucksensoren der ersten bzw. zweiten Druckschwankungsmessanordnung bilden. Die Betriebs- und Auswertungseinheit 20 umfasst weiterhin einen Signalprozessor 26, welcher an die Ausgänge der Subtraktionsschaltungen angeschlossen und dazu eingerichtet ist, anhand des zeitlichen Verlaufs mindestens eines der Differenzsignale die Ablösefrequenz f der Wirbel zu bestimmen. Weiterhin ist der Signalprozessor dazu eingerichtet die Amplituden der Differenzsignale zu bestimmen und daraus einen Amplitudenquotienten der Amplituden $A_2/A_1$ der Differenzsignale der ersten bzw. zweiten Druckschwankungsmessanordnung zu berechnen. Die Betriebs- und Auswertungseinheit 20 ist weiterhin dazu eingerichtet, anhand des Amplitudenquotienten einen aktuellen Wert für die Reynoldszahl zu ermitteln, auf dessen Basis die Strouhalzahl bestimmt wird, mit deren Hilfe dann auf Grundlage der Ablösefrequenz f der Wirbel eine Strömungsgeschwindigkeit bzw. eine Volumendurchflussrate v berechnet werden.

Einzelheiten zur Ermittlung der Strouhalzahl anhand des Amplitudenverhältnisses werden weiter unten anhand der Fign. 3a bis 3b erläutert.

Bei Bedarf kann zudem anhand der Volumendurchflussrate v und der Reynoldzahl Re die kinematische Viskosität ν gemäß

$$\nu = (4\,\dot{v}) / (\pi\, Re\, d)$$

berechnet und neben dem Durchflussmesswert als Zusatzinformation ausgegeben werden, wobei d der Rohrdurchmesser ist.

Das in Fig. 2 dargestellte Ausführungsbeispiel eines erfindungsgemäßen Durchflussmessgeräte 101 nach dem Wirbelzählerprinzip umfasst ein Messrohr 102 in dem ein Staukörper 102 mit angeordnet ist, der insbesondere symmetrisch zu einer Symmetrieebene verläuft, in welcher die Längsachse des Messrohrs verläuft. Der Staukörper 104 ist an seinen beiden Enden mit dem Messrohr 102 verbunden. Der Staukörper 104 dient dazu, im Messbetrieb in einem im Messrohr strömenden Medium eine Karmansche Wirbelstraße mit durchflussabhängiger Wirbelfrequenz zu erzeugen.

Das erfindungsgemäße Durchflussmessgerät 101 weist eine erste und eine zweite Druckschwankungsmessanordnung 112, 116 zum Erfassen von Druckschwankungen auf, die durch die Wirbelstraße bewirkt sind. Die erste Druckschwankungsmessanordnung 112 weist ein Paddel auf, das bezüglich der obigen Symmetrieebene symmetrisch angeordnet ist und senkrecht zu dieser Symmetrieebene mittels der Wirbel auslenkbar ist, wie durch den Doppelpfeil in der Zeichnung angedeutet. Die zweite Druckschwankungsmessanordnung 116 weist ebenfalls ein Paddel auf, das bezüglich der obigen Symmetrieebene symmetrisch angeordnet ist und senkrecht zu dieser Symmetrieebene mittels der Wirbel auslenkbar ist, wie durch den Doppelpfeil in der Zeichnung angedeutet. Die beiden Druckschwankungsmessanordnungen 112, 116 umfassen jeweils einen elektrischen Wandler, insbesondere einen differentiellen kapazitiven Wandler, einen piezoelektrischen Wandler, einen induktiven Wandler oder einen resistiven Wandler, um die Auslenkungen der Paddel in ein elektrisches Signal zu wandeln.

Das erfindungsgemäße Durchflussmessgerät umfasst weiterhin eine Betriebs- und Auswertungseinheit 120 zum Auswerten der Signale der Druckschwankungsmessanordnungen 112, 116. Die Betriebs- und Auswertungseinheit 120 umfasst einen ersten und zweiten Vorverstärker 122, 124, welche jeweils die Primärsignale eines elektrischen Wandler eines der beiden Druckschwankungsmessanordnungen aufbereiten. Die Betriebs- und Auswertungseinheit 120 umfasst weiterhin einen Signalprozessor 126, welcher an die Ausgänge der Vorverstärker 122, 124 angeschlossen und dazu eingerichtet ist, anhand des zeitlichen Verlaufs mindestens eines der Ausgangssignale der Vorverstärker die Ablösefrequenz f der Wirbel zu bestimmen. Weiterhin ist der Signalprozessor dazu eingerichtet die Amplituden der Ausgangssignale zu bestimmen und daraus einen Amplitudenquotienten der Amplituden $A_2/A_1$ der Differenzsignale der ersten bzw. zweiten Druckschwankungsmessanordnung zu berechnen. Die Betriebs- und Auswertungseinheit 120 ist weiterhin dazu eingerichtet, anhand des Amplitudenquotienten einen aktuellen Wert für die Reynoldszahl zu ermitteln, auf dessen Basis die Strouhalzahl bestimmt wird, mit deren Hilfe dann auf Grundlage der Ablösefrequenz f der Wirbel eine Strömungsgeschwindigkeit bzw. eine Volumendurchflussrate v berechnet werden.

Einzelheiten zur Ermittlung der Strouhalzahl anhand des Amplitudenverhältnisses werden weiter unten anhand der Fign. 3a bis 3b erläutert.

Bei Bedarf kann zudem anhand der Volumendurchflussrate v und der Reynoldzahl Re die kinematische Viskosität *v* gemäß

$$\nu = (4\,\dot{\mathrm{v}}) / (\pi\, Re\, d)$$

berechnet und neben dem Durchflussmesswert als Zusatzinformation ausgegeben werden, wobei d der Rohrdurchmesser ist.

Das der Erfindung zugrundeliegende Prinzip wird nun anhand der Fign. 3a bis 3c erläutert. Fig. 3a zeigt einen Zusammenhang zwischen der Reynoldszahl und dem Quotienten der Amplituden der Signale zweier Druckschwankungssensoren in Abhängigkeit von deren Position.

Über einen großen Bereich von Reynoldszahlen wurden die Druckschwankungen an im Messrohr gestaffelten Orten mehrerer Druckschwankungssensoren für das in Fig. 3b dargestellte, experimentelle Durchflussmessgerät 201 ermittelt. Dann wurde jeweils die Amplitude des Signals eines im Messrohr 202 angeordneten, von einem Staukörper 204 weiter beabstandeten Druckschwankungssensors (S2, S3, S4, S5) durch die Amplitude des Signals eines dem Staukörper 204 nahen Druckschwankungssensors S1 geteilt. Der resultierende Quotient ist in Fig. 3a als Funktion der Reynoldszahl für verschiedene Druckschwankungssensoren (S2, S3, S4, S5) dargestellt, wobei der Linientyp zur Darstellung des Amplitudenverhältnisses in Fig. 3a, dem Linientyp zur Darstellung der Sensorposition in Fig. 3b entspricht.

Die Betriebs und Auswertungseinheit eines erfindungsgemäßen Messgerät weist dem entsprechend die Umkehrfunktion einer der in Fig. 3a dargestellten Funktionen auf, um anhand des im Messbetrieb ermittelten Amplitudenverhältnisses der Signale seiner Druckschwankungssensoren einen aktuellen Wert für die Reynoldszahl Re zu ermitteln.

Über die Reynoldszahl kann schließlich die Strouhalzahl ermittelt werden, die in den Proportionalitätsfaktor zur Ermittlung der Strömungsgeschwindigkeit anhand der Wirbelfrequenz eingeht. Fig 3c zeigt schematisch den Zusammenhang zwischen der Strouhalzahl und der Reyynoldszahl für Durchflussmessgeräte nach dem Wirbelzählerprinzip.

Für ein konkretes Ausführungsbeispiel eines erfindungsgemäßen Durchflussmessgerätes kann die Strouhalzahl in Abhängigkeit der Reynoldszahl selbstverständlich spezifisch ermittelt werden, und der ermittelte Zusammenhang ist in der Betriebs- und Auswerteeinheit zu implementieren. Grundsätzlich sollte der ermittelte Zusammenhang aber einen ähnlichen Verlauf haben, wie der in Fig. 3c gezeigte.

**Patentansprüche**

**1.** Durchflussmessgerät (1; 101) nach dem Wirbelzählerprinzip, umfassend:

ein Messrohr (2; 102) zum Führen eines Fluids in Längsrichtung des Messrohrs;
einen Staukörper (4; 104), der in dem Messrohr (2; 102) angeordnet ist, wobei der Staukörper dazu dient, eine Karmansche Wirbelstraße mit durchflussabhängiger Wirbelfrequenz zu verursachen, wenn das Messrohr von einem Fluid durchströmt wird;
eine erste Druckschwankungsmessanordnung (12, 14; 112) zum Erfassen von Druckschwankungen, die durch die Wirbelstraße bewirkt sind, und zum Bereitstellen von druckschwankungsabhängigen Signalen;
eine zweite Druckschwankungsmessanordnung (16, 18; 116) zum Erfassen von Druckschwankungen, die durch die Wirbelstraße bewirkt sind, und zum Bereitstellen von druckschwankungsabhängigen Signalen;
wobei die erste Druckschwankungsmessanordnung (12, 14; 112) in Längsrichtung des Messrohrs von der zweiten Druckschwankungsmessanordnung (16, 18; 116) beabstandet ist;
eine Auswertungseinheit (20; 120), welche dazu eingerichtet ist, anhand der Signale mindestens einer der Druckschwankungsmessanordnungen eine Wirbelfrequenz und in Abhängigkeit der Wirbelfrequenz einen Durchflussmesswert zu bestimmen;
**dadurch gekennzeichnet, dass** die Auswerteeinheit (20; 120) weiterhin dazu eingerichtet ist, anhand des Verhältnisses der Amplituden der Signale der ersten Druckschwankungsmessanordnung (12, 14; 112) und der zweiten Druckschwankungsmessanordnung (16, 18; 116) die aktuelle Reynoldszahl zu bestimmen.

**2.** Durchflussmessgerät nach Anspruch 1, wobei die Auswertungseinheit (20; 120) dazu eingerichtet ist, den Durchflussmesswert unter Berücksichtigung der ermittelten Reynoldszahl zu bestimmen.

**3.** Durchflussmessgerät nach Anspruch 1 oder 2, wobei mindestens eine der Druckschwankungsmessanordnungen (112, 116) einen Paddelsensor umfasst.

**4.** Durchflussmessgerät nach einem der vorhergehenden Ansprüche, wobei mindestens eine der Druckschwankungsmessanordnungen (12, 14, 16, 18) mindestens einen Druckabgriff in einer Messrohrwand und / oder dem Staukörper umfasst.

**5.** Durchflussmessgerät nach einem der vorhergehenden Ansprüche, wobei mindestens eine der Druckschwankungsmessanordnungen eine erste Differenzdruckmessanordnung aufweist, mit einem ersten Druckabgriff und einem zweiten Druckabgriff, zum Erfassen von Druckdifferenzen, die durch die Wirbelstraße bewirkt sind, und zum Bereitstellen von differenzdruckabhängigen Signalen.

**6.** Durchflussmessgerät nach Anspruch 5, wobei die zweite der Druckschwankungsmessanordnungen eine zweite Differenzdruckmessanordnung aufweist, mit einem dritten Druckabgriff und einem vierten Druckabgriff, zum Erfassen von Druckdifferenzen, die durch die Wirbelstraße bewirkt sind, und zum Bereitstellen von differenzdruckabhängigen Signalen.

**7.** Durchflussmessgerät nach einem der Ansprüche 1 bis 5 wobei mindestens eine Druckschwankungsmessanordnungen einen Druckabgriff und einen Differenzdrucksensor mit einem ersten Druckeingang und einem zweiten Druckeingang aufweist, wobei der zweite Druckeingang eine Drossel aufweist, so dass er eine andere Übertragungsfunktion für Druckschwankungen aufweist, als der erste Druckeingang, wobei der erste Druckeingang und der zweite Druckeingang an den Druckabgriff angeschlossen sind, so dass das Signal des Differenzdrucksensors im Wesentlichen von der zeitlichen Änderung des Drucks (dp/dt) abhängt.

**8.** Durchflussmessgerät nach einem der vorhergehenden Ansprüche, wobei der Staukörper senkrecht zur Längsrichtung eine Breite b aufweist, wobei die erste Druckschwankungsmessanordnung in Längsrichtung des Messrohrs nicht weniger als eine Breite b insbesondere nicht weniger als zwei Breiten b, vorzugsweise nicht weniger als 3 Breiten von der zweiten Druckschwankungsmessanordnung beabstandet ist.

**9.** Durchflussmessgerät nach einem der vorhergehenden Ansprüche, wobei die Auswerteeinheit (20; 120) weiterhin dazu eingerichtet ist, aus der aktuellen Reynoldszahl die kinematische Viskosität des im Messrohr strömenden Mediums zu bestimmen.

**10.** Verfahren zum Bestimmen mindestens der Reynoldszahl eines Fluids, mittels eines Durchflussmessgerät nach einem der vorhergehenden Ansprüche, wobei das Verfahren die folgenden Schritte aufweist:

Strömenlassen eines Fluids durch das Messrohr;
Erfassen von Druckschwankungen, welche durch die Wirbelstraße des strömenden Fluids verursacht sind mittels der ersten Druckschwankungsmessanordnung;
Erfassen von Druckschwankungen, welche durch die Wirbelstraße des strömenden Fluids verursacht sind mittels der zweiten Druckschwankungsmessanordnung; und
Bestimmen eines aktuellen Werts der Reynoldszahl anhand des Verhältnisses der Amplituden Signale der ersten Druckschwankungsmessanordnung und der zweiten Druckschwankungsmessanordnung.

**11.** Verfahren nach Anspruch 10, umfassend:

Bestimmen eines Werts der Reynoldszahl des Fluids anhand des Verhältnisses der Amplituden Signale der ersten Druckschwankungsmessanordnung und der zweiten Druckschwankungsmessanordnung;
Bestimmen eines Werts der Frequenz mindestens eines der Signale der Druckschwankungsmessanordnung; und
Bestimmen eines Durchflussmesswerts in Abhängigkeit von dem Wert der Frequenz unter Berücksichtigung des Werts der Reynoldszahl.

**12.** Verfahren nach einem der Ansprüche 10 oder 11, weiterhin umfassend:
Bestimmen der kinematischen Viskosität des im Messrohr strömenden Mediums aus dem aktuellen Wert der Reynoldszahl.

## Claims

**1.** Flowmeter (1, 101) according to the vortex meter principle, comprising

a measuring tube (2, 102) designed to conduct a fluid in the longitudinal direction of the measuring tube;
a bluff body (4, 104), which is arranged in the measuring tube (2, 102), said bluff body serving to generate a Karman vortex street with a vortex frequency depending on the flow when a fluid flows through the measuring tube;

a first pressure fluctuation measuring arrangement (12, 14, 112) designed to measure pressure fluctuations, which are caused by the vortex street, and designed to provide signals that are dependent on the pressure fluctuations;

a second pressure fluctuation measuring arrangement (16, 18, 116) designed to measure pressure fluctuations, which are caused by the vortex street, and designed to provide signals that are dependent on the pressure fluctuations;

wherein the first pressure fluctuation measuring arrangement (12, 14, 112) is spaced at a distance from the second pressure fluctuation measuring arrangement (16, 18, 116) in the longitudinal direction of the measuring tube;

an evaluation unit (20, 120), which is configured to determine a vortex frequency using the signals of at least one of the pressure fluctuation measuring arrangements and to determine a flow measured value depending on the vortex frequency;

**characterized in that**

the evaluation unit (20, 120) is further configured to determine the current Reynolds number using the ratio of the amplitudes of the signals of the first pressure fluctuation measuring arrangement (12, 14, 112) and of the second pressure fluctuation measuring arrangement (16, 18, 116).

**2.** Flowmeter as claimed in Claim 1, wherein the evaluation unit (20, 120) is designed to determine the flow measured value taking into account the Reynolds number that is determined.

**3.** Flowmeter as claimed in Claim 1 or 2, wherein at least one of the pressure fluctuation measuring arrangements (112, 116) is a paddle sensor.

**4.** Flowmeter as claimed in one of the previous claims, wherein at least one of the pressure fluctuation measuring arrangements (12, 14, 16, 18) comprises at least a pressure tapping in a wall of the measuring tube and/or in the bluff body.

**5.** Flowmeter as claimed in one of the previous claims, wherein at least one of the pressure fluctuation measuring arrangements comprises a first differential pressure measuring arrangement, with a first pressure tapping and a second pressure tapping, designed to measure pressure differences caused by the vortex street, and designed to provide signals that depend on the differential pressure.

**6.** Flowmeter as claimed in Claim 5, wherein the second of the pressure fluctuation measuring arrangements has a second differential pressure measuring arrangement, with a third pressure tapping and a fourth pressure tapping, designed to measure pressure differences, which are caused by the vortex street, and designed to provide signals that depend on the differential pressure.

**7.** Flowmeter as claimed in one of the Claims 1 to 5, wherein at least one of the pressure fluctuation measuring arrangements has a pressure tapping and a differential pressure sensor with a first pressure input and with a second pressure input, wherein the second pressure input has a throttle such that it has another transmission function for pressure fluctuations than the first pressure input, wherein the first pressure input and the second pressure input are connected to the pressure tapping such that the signal of the differential pressure sensor essentially depends on the variation in pressure over time (dp/dt).

**8.** Flowmeter as claimed in one of the previous claims, wherein the bluff body has a width b perpendicular to the longitudinal direction, wherein the first pressure fluctuation measuring arrangement in the longitudinal direction of the measuring tube is spaced from the second pressure fluctuation measuring arrangement by not less than a width b, particularly not less than two widths b, preferably not less than three widths b.

**9.** Flowmeter as claimed in one of the previous claims, wherein the evaluation unit (20, 120) is further configured to determine the kinematic viscosity of the medium flowing through the measuring tube on the basis of the current Reynolds number.

**10.** Procedure to determine at least the Reynolds number of a fluid using a flowmeter as claimed in one of the previous claims, wherein said procedure comprises the following steps:

A fluid is allowed to flow through the measuring tube;

Pressure fluctuations, which are caused by the vortex street of the flowing fluid, are measured using the first pressure fluctuation measuring arrangement;

Pressure fluctuations, which are caused by the vortex street of the flowing fluid, are measured using the second pressure fluctuation measuring arrangement;

A current Reynolds number value is determined on the basis of the ratio of the amplitudes of the signals of the first pressure fluctuation measuring arrangement to the second pressure fluctuation measuring arrangement.

**11.** Procedure as claimed in Claim 10, comprising:

Determination of a value of the Reynolds number of the fluid using the ratio of the amplitudes of the signals of the first pressure fluctuation measuring arrangement to the second pressure fluctuation measuring arrangement;
Determination of a value of the frequency of at least one of the signals of the pressure fluctuation measuring arrangement; and
Determination of a flow measured value depending on the value of the frequency taking the value of the Reynolds number into consideration.

**12.** Procedure as claimed in one of the Claims 10 or 11, further comprising:
Determination of the kinematic viscosity of the medium flowing through the measuring tube from the current value of the Reynolds number.

## Revendications

**1.** Débitmètre (1, 101) selon le principe du débitmètre vortex, comprenant

un tube de mesure (2, 102) destiné à guider un fluide dans le sens longitudinal du tube de mesure ;
un corps de retenue (4, 104), lequel est disposé dans le tube de mesure (2, 102), le corps de retenue servant à générer une allée de tourbillons selon Karman avec une fréquence des tourbillons dépendant du débit ;
un premier dispositif de mesure de fluctuation de pression (12, 14, 112) destiné à la mesure de fluctuations de pression, qui sont provoquées par l'allée de tourbillons, et destiné à fournir des signaux dépendant des fluctuations de pression ;
un deuxième dispositif de mesure de fluctuation de pression (16, 18, 116) destiné à la mesure de fluctuations de pression, qui sont provoquées par l'allée de tourbillons, et destiné à fournir des signaux dépendant des fluctuations de pression ;
le premier dispositif de mesure de fluctuation de pression (12, 14, 112) étant espacé du deuxième dispositif de mesure de fluctuation de pression (16, 18, 116) dans le sens longitudinal du tube de mesure ;
une unité d'exploitation (20, 120), laquelle est configurée de telle sorte à déterminer, sur la base des signaux d'au moins l'un des dispositifs de mesure de fluctuation de pression, une fréquence de tourbillons et une valeur mesurée de débit en fonction de la fréquence des tourbillons ;
**caractérisé**
**en ce que** l'unité d'exploitation (20, 120) est configurée en outre de telle sorte à déterminer, sur la base du rapport des amplitudes des signaux du premier dispositif de mesure de fluctuation de pression (12, 14, 112) et du deuxième dispositif de mesure de fluctuation de pression (16, 18, 116).

**2.** Débitmètre selon la revendication 1, pour lequel l'unité d'exploitation (20, 120) est conçue de telle sorte à déterminer la valeur mesurée de débit en tenant compte du nombre de Reynolds.

**3.** Débitmètre selon la revendication 1 ou 2, pour lequel au moins l'un des dispositifs de mesure de fluctuation de pression (112, 116) comprend un capteur à ailettes.

**4.** Débitmètre selon l'une des revendications précédentes, pour lequel au moins l'un des dispositifs de mesure de fluctuation de pression (12, 14, 16, 18) comprend au moins une prise de pression dans une paroi de tube de mesure et/ou dans le corps de retenue.

**5.** Débitmètre selon l'une des revendications précédentes, pour lequel au moins l'un des dispositifs de mesure de fluctuation de pression comporte un premier dispositif de mesure de pression différentielle, avec une première prise de pression et une deuxième prise de pression, destiné à la mesure de différences de pression provoquées par l'allée de tourbillons, et destiné à fournir les signaux dépendant de la pression différentielle.

**6.** Débitmètre selon la revendication 5, pour lequel le deuxième des dispositifs de mesure de fluctuation de pression comporte un deuxième dispositif de mesure de pression différentielle, avec une troisième prise de pression et une quatrième prise de pression, destiné à la mesure de différences de pression, qui sont provoquées par l'allée de tourbillons, et destiné à fournir des signaux dépendant de la pression différentielle.

**7.** Débitmètre selon l'une des revendications 1 à 5, pour lequel au moins l'un des dispositifs de mesure de fluctuation de pression présente une prise de pression et un capteur de pression différentielle avec une première entrée de pression et avec une deuxième entrée de pression, la deuxième entrée de pression comportant un étrangleur, si bien qu'elle présente une autre fonction de transmission pour les fluctuations de pression par rapport à la première entrée de pression, la première entrée de pression et la deuxième entrée de pression étant raccordées à la prise de pression, de sorte que le signal du capteur de pression différentielle dépend pour l'essentiel de la variation dans le temps de la pression (dp/dt).

**8.** Débitmètre selon l'une des revendications précédentes, pour lequel le corps de retenue présente perpendiculairement au sens longitudinal une largeur b, le premier dispositif de mesure de fluctuation de pression étant distant du deuxième dispositif de mesure de fluctuation de pression au moins d'une largeur b, notamment au moins de deux largeurs b, de préférence au moins de trois largeurs b.

**9.** Débitmètre selon l'une des revendications précédentes, pour lequel l'unité d'exploitation (20, 120) est configurée en outre de telle sorte à déterminer, à partir du nombre de Reynolds actuel, la viscosité cinématique du produit s'écoulant dans le tube de mesure.

**10.** Procédé destiné à la détermination au moins du nombre de Reynolds d'un fluide, au moyen d'un débitmètre selon l'une des revendications précédentes, le procédé comprenant les étapes suivantes :

Écoulement d'un fluide à travers le tube de mesure ;
Mesure des fluctuations de pression, qui sont provoquées par l'allée de tourbillons du fluide en écoulement, au moyen du premier dispositif de mesure de fluctuation de pression ;
Mesure des fluctuations de pression, qui sont provoquées par l'allée de tourbillons du fluide en écoulement, au moyen du deuxième dispositif de mesure de fluctuation de pression ;
Détermination d'une valeur actuelle du nombre de Reynolds sur la base du rapport entre les amplitudes des signaux du premier dispositif de mesure de fluctuation de pression et du deuxième dispositif de mesure de fluctuation de pression.

**11.** Procédé selon la revendication 10, comprenant :

Détermination d'une valeur du nombre de Reynolds du fluide sur la base du rapport entre les amplitudes des signaux du premier dispositif de mesure de fluctuation de pression et du deuxième dispositif de mesure de fluctuation de pression.
Détermination d'une valeur de la fréquence d'au moins l'un des signaux du dispositif de mesure de fluctuation de pression ; et
Détermination de la valeur de débit en fonction de la valeur de la fréquence en tenant compte de la valeur du nombre de Reynolds.

**12.** Procédé selon l'une des revendications 10 ou 11, comprenant en outre :
Détermination de la viscosité cinématique du produit s'écoulant dans le tube de mesure à partir de la valeur actuelle du nombre de Reynolds.

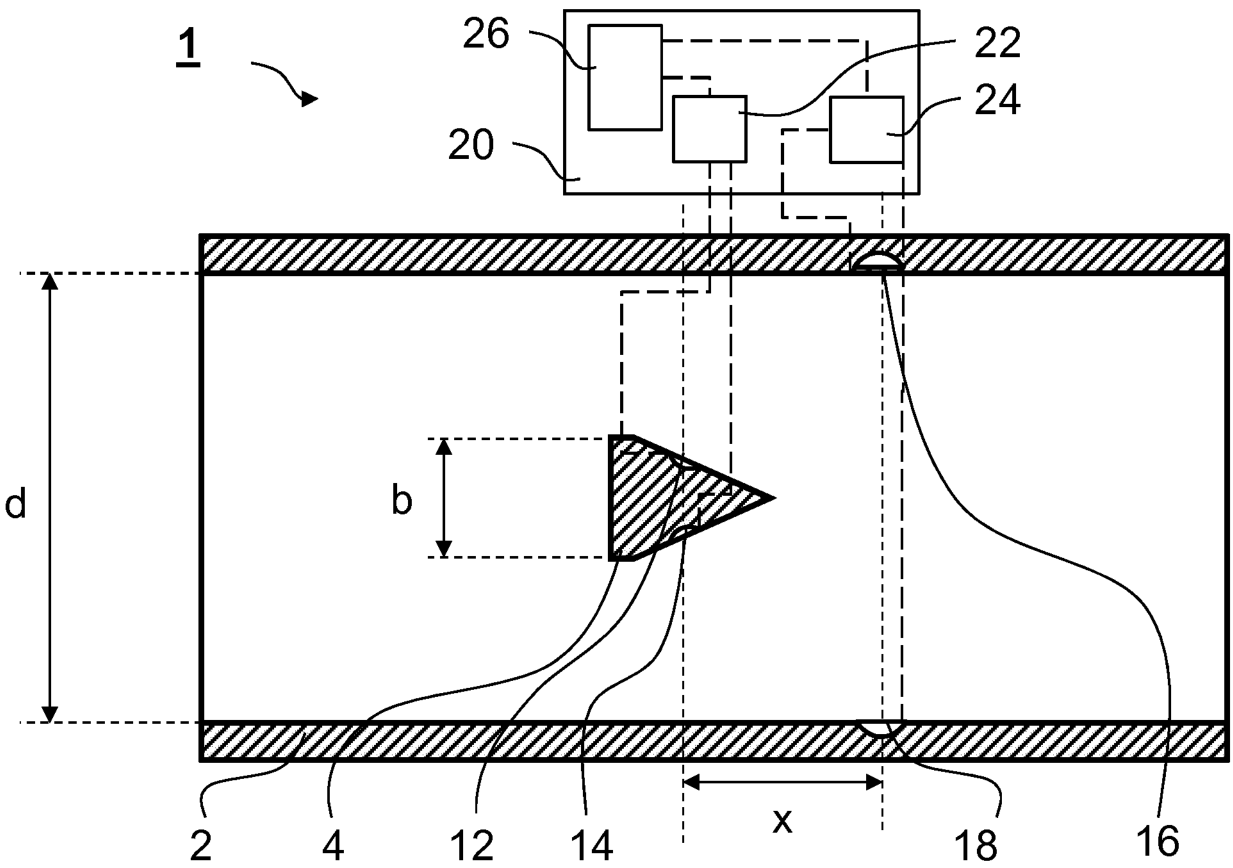


Fig. 1

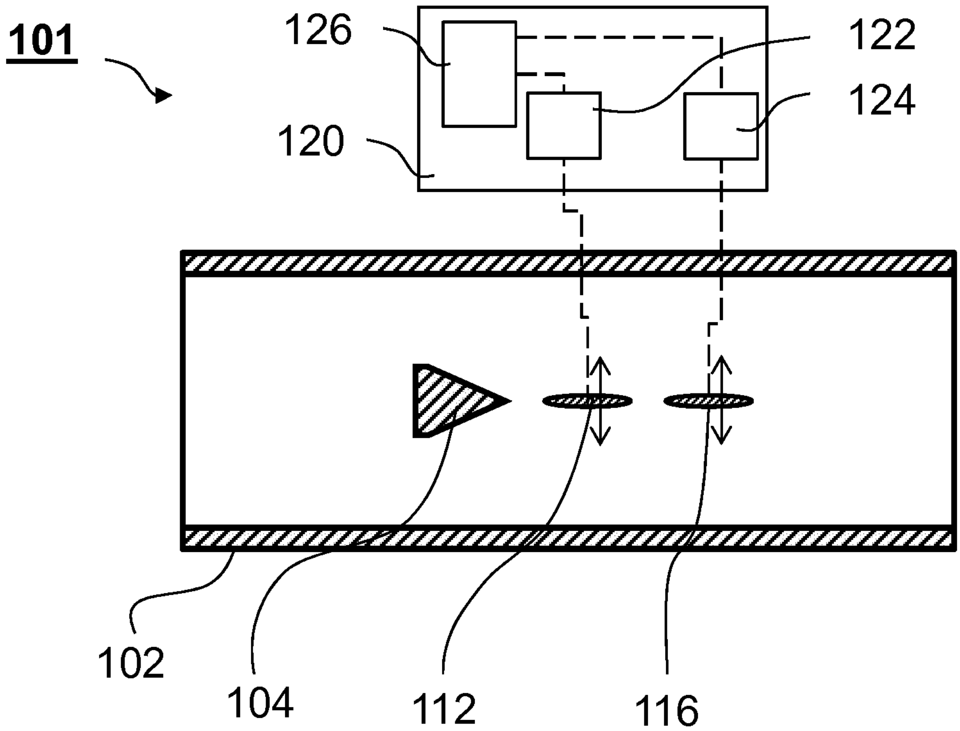


Fig. 2

Fig. 3a

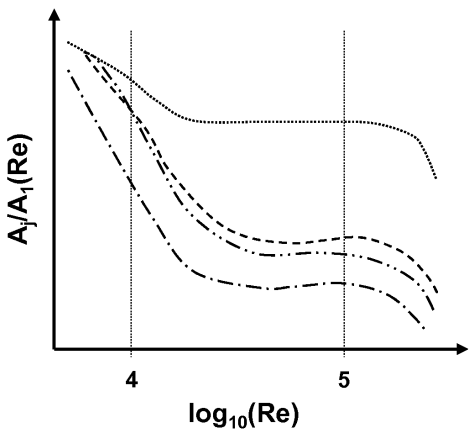


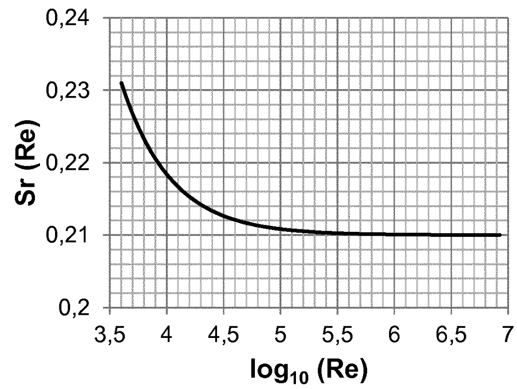


Fig. 3c

Fig. 3b

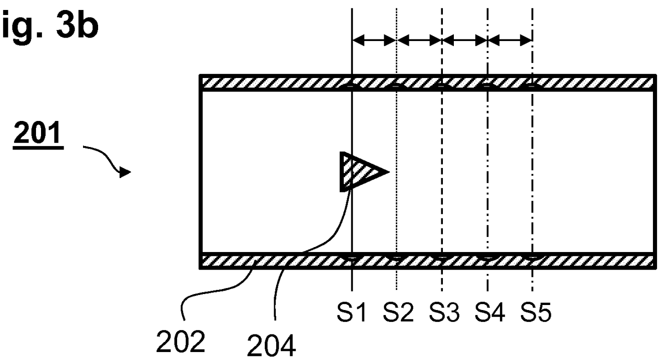

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102009001525
- US 2009211368 A1
- EP 0619473 A1

### In der Beschreibung aufgeführte Nicht-Patentliteratur

- Durchfluss-Handbuch. 2003, 103 ff